# EUROPEAN PATENT SPECIFICATION

(11) **EP 2 920 240 B1**
(45) Date of publication and mention of the grant of the patent: **09.03.2022**
(21) Application number: 13820587.7
(22) Date of filing: 26.06.2013
(51) Int. Cl.: C08L 5/08, C08L 89/00, C08J 3/075

(54) **THE METHOD OF OBTAINING THE AQUEOUS SOLUTION OF CHITOSAN, CHITOSAN COMPOSITION, CHITOSAN AEROSOL, THE METHOD OF PRODUCING THE CHITOSAN HYDROGEL MEMBRANE AND THE METHOD OF PRODUCING CHITOSAN-PROTEIN BIOPOLYMER MATERIAL**
VERFAHREN ZUR HERSTELLUNG EINES WÄSSRIGEN LÖSUNG AUS CHITOSAN, CHITOSANZUSAMMENSETZUNG, CHITOSANAEROSOL, VERFAHREN ZUR HERSTELLUNG EINER CHITOSAN-HYDROGEL-MEMBRAN UND VERFAHREN ZUR HERSTELLUNG EINES CHITOSAN-PROTEIN-BIOPOLYMERSTOFFES
PROCÉDÉ D'OBTENTION D'UNE SOLUTION AQUEUSE DE CHITOSANE, COMPOSITION DE CHITOSANE, AÉROSOL DE CHITOSANE, PROCÉDÉ DE PRODUCTION D'UNE MEMBRANE D'HYDROGEL À BASE DE CHITOSANE ET PROCÉDÉ DE PRODUCTION D'UN MATÉRIAU BIOPOLYMÈRE DE TYPE CHITOSANE-PROTÉINE

(30) Priority: 20.07.2012 PL 40007812; 26.04.2013 PL 40369713
(43) Date of publication of application: 23.09.2015
(73) Proprietor: Politechnika Gdanska, 80-233 Gdansk (PL)
(72) Inventor: GORCZYCA, Grzegorz, PL-84-300 Lebork (PL); TYLINGO, Robert, PL-80-125 Gdansk (PL); SZWEDA, Piotr, PL-83-304 Przodkowo (PL); MILEWSKI, Slawomir, PL-80-809 Gdansk (PL); SADOWSKA, Maria, PL-80-217 Gdansk (PL); ZALEWSKA, Magdalena, PL-87-335 Swiedziebnia (PL)
(86) International application number: PCT/PL2013/000085
(87) International publication number: WO 2014/014370

(56) References cited:
- EP-A1- 1 243 688
- EP-A1- 2 159 259
- EP-A2- 0 138 385

## Description

The object of the invention is a method of obtaining an aqueous solution of chitosan and its application in the form of chitosan composition and chitosan aerosol. The object of the invention is also a method of producing the chitosan hydrogel membrane and a method of producing chitosan-protein biopolymer material with the use of aqueous solution of chitosan. These inventions may be applied primarily as a matrix for medical products, in particular those with an anti-microbial activity. The invention may also be applied in the process of obtaining crop protection chemicals as well as cosmetic and food preparations.

Chitosan is a cationic polymer obtained from chitin in the process of N-deacetylation, and constructed of the subunits of β(1→4)-glucosamine and N-acetyl-D-glucosamine. Due to its properties such as non-toxicity, biocompatibility and biodegradability it is used in food industry, pharmacy, cosmetic industry and in applications related to agriculture and environment protection.

The basic disadvantage of this polymer is its insolubility in water which is connected with the presence of strong hydrogen links inside a particle of chitosan and between individual particles of chitosan. However, it is perfectly soluble in acid solutions out of which solutions of acetic acid are most widely used. Presence of acids in the chitosan solutions entails limitations of its usage due to toxicity or acid reaction of the solution. Therefore, chitosan solutions cannot be used as solutions applied directly on the skin or as solutions having contact with living cells. Materials obtained from such solution, e.g. sponges, may be used for this purpose only after being rinsed from acid with water or with alkaline solutions. Use of acid solution in agriculture has a negative impact on development of plants growing at alkaline pH.

The problem is solved by modification of chitosan by way of chemical reactions introducing new functional groups, which result in obtaining chitosan derivatives which are water soluble. Another known method is depolymerisation of chitosan to get particles less than 1000 Da, or oligosaccharides, or production of microcrystalline chitosan by way of precipitating chitosan in its solutions in acids with the use of strong alkaline. The precipitate obtained in this manner is washed with water (rinsing acid) and used for multiple purposes. Chemical modifications are characterised by significant inconvenience resulting from reduction of biocompatibility of chitosan. They are also expensive and require advanced equipment. The process of depolymerisation causes loss of molecular weight, leading to the loss of functional and mechanical properties, and preventing application of such chitosan in other forms, including sponge. The known methods are described below.

Patent description US 6716970 provides information on the method of producing a soluble chitosan in water by its chemical derivatisation by way of random N- and O-acetylation. Water-soluble derivatives are produced in the reaction of the chitosan previously dissolved in the acid with an acylating reagent in the presence of at least one phase transfer catalyst, e.g. quaternary ammonium salts, crown ethers or pyridine salt. According to the described method, a product of purifying and drying is N-, O-acyl derivative of chitosan which is soluble in the environment with pH between 6 and 8.

As far as scientific literature is concerned, Sobol M, Bartkowiak A, de Haan B, de Vos P., J Biomed Mater Res A, 2012, also a method of obtaining the primary and tertiary amine derivatives of chitosan oligosaccharides soluble in the environment where pH amounts to 7.0, applicable in formulation of chitosanalginate membranes is known. Whereas, patent description US 477269 defines a method of producing quaternary derivatives of chitosan applied in the production of shampoo and hair conditioners.

Application documentation CN 102786607 defines the method of producing water-soluble chitosan oligosaccharides, i.e. chitosan with a very low molecular weight, by hydrolysis of chitosan particles dissolved in acetic acid, with the use of hydrogen peroxide at an increased temperature, and then precipitating chitosan hydrolyzate by controlled addition of strong alkaline solution. The solution is spray-dried in order to obtain a powdered product. Fragmentation of the chitosan particles may also be facilitated by means of ultrasounds. In such a case, the solution in which hydrolysis occurs is subjected to the process of sonification, as described in application documentation CN 102321194.

The known methods of obtaining derivatives of chitosan which are water-soluble present numerous limitations and inconveniences. The methods of producing water-soluble chitosan in the process of polymer particle fragmentation (hydrolysis) result only in obtaining chitosan with a low molecular weight or even chitosan oligosaccharides. This prevents application of chitosans with higher molecular weights, whereas chitosan with a low molecular weight still requires hydrolysis of the chain particles so as to be soluble in water. Obtaining chemically modified chitosan which will be soluble in water requires application of multistage procedures using, on many occasions, organic solvents which are harmful for health and environment. The obtained derivatives are frequently characterised by a considerably lower biocompatibility in comparison to the non-modified chitosan. Regardless of the method of producing water-soluble particles of chitosan, the processes are highly energy-consuming which is connected with the necessity of drying the obtained product to store it for a long time.

An alternative to the above-indicated methods, and at the same time a solution of the problems related to their application, is a method of obtaining microcrystalline chitosan, i.e. chitosan precipitate.

The known methods of obtaining microcrystalline chitosan consist in precipitation of chitosan from the acid solution with the use of a base. The product obtained by this method is still not soluble in water, except for microcrystalline chitosan produced from chitosan with a very low molecular weight or chitosan oligosaccharides. After rinsing acid salts produced as a result of neutralising the acid used to dissolve chitosan it is possible to form various materials directly from the obtained precipitate. These type of materials do not contain particles of acid leading to reduction of biocompatibility to the cells of living organisms, and also do not cause a change of the reaction of the environment with which they have contact, which is particularly significant for its applications in plant cultivation or immobilisation of the active substances which are sensitive to low pH. Moreover, numerous literature publications indicate better properties of the microcrystalline chitosan in comparison to chitosan solutions obtained from acid dispersion, for example higher anti-microbial activity, better adhesion capacity or better ability of expanding in water. The advantage of this approach is an ability of the microcrystalline chitosan to form membranes directly on its water suspensions, which allows for a series of applications in which formulations made from acid solutions were not possible or required rinsing residual acids.

The known method of using chitosan comprises its application in production of chitosan hydrogel membrane which is used as wound dressing, coating for fruit and vegetables, as well as cosmetic masks.

There are known methods of obtaining chitosan hydrogel membranes from microcrystalline chitosan. Application description PL 351603 provides information about the method of producing membranes designed for controlled regeneration of bones in dental surgery, maxillofacial surgery, peridontology, and in particular dental implantology. The method of producing membranes is characterised in that it forms a mixture consisting of microcrystalline chitosan in 3% gel suspension, approximately 0.03 g of glycerol or propylene glycol and 4 ml of distilled water which after mixing is poured on a non-stick plate and then dried at a temperature not exceeding 25°C until reaching a macroscopically dry membrane.

Also patent description PL 198876 defines a method of obtaining dry chitosan membranes. This method is characterised in that the chitosan hydrogel, obtained by action of liquid or gaseous precipitating agent on the solution of chitosan salt, is placed in secondary solvent, e.g. acetone, methanol, dioxane, in a pressure reactor and then saturated with carbon dioxide under supercritical conditons. Afterwards the supercritical conditions are removed. Thus it may be said that the process uses supercritical conditions, necessity of using autoclaves and organic solvents.

Usage of the microcrystalline chitosan does not provide a solution to all the limitations related to application of the chitosan formulations made from solutions of different acids, and also presents certain limitations for already possible applications. The microcrystalline chitosan obtained as a result of neutralising the acidic solution of chitosan is milky-white in colour. Therefore, any formulations in the form of membranes will not be transparent which is required e.g. in the case of forming hydrogel wound dressing materials (permitting to observe the healing process without the necessity of removing the dressing), or in the case of encapsulation of fruit or plant leaves in order to reduce the degree of their drying, as well as to ensure anti-microbial protection.

Usage of chitosan in the structure of chitosan-protein materials which considerably accelerate the process of skin regeneration is widely known.

Patent description PL188278 defines a method of producing biological dressing containing water dispersion of chitosan and tissue of human placenta according to which the obtained mixture is lyophilised and/or dried under reduced pressure. Use of the human placenta homogenate as a source of collagen renders the aforementioned method costly, and the source of its obtaining may arouse ethical controversies. Application of chitosan in the form of colloidal solution does not allow for its efficient interaction with collagen and other proteins contained in the human placenta homogenate.

Application documentation WO2010043978 provides information about the method of producing multi-layer structure to be implemented in the place of damaged tissue, consisting in lyophilisation of at least one mixture of cross-linked collagen and glycosaminoglycans, including chitosan, in order to form a porous layer, and then combining the layer with a collagen membrane. The obtained material is additionally washed in the solution of sodium hydroxide in order to remove remains of acid in which chitosan was previously dissolved.

Application documentation US7833790 provides information on the method of producing wound dressing consisting in lyophilisation of dispersion of the human collagen and oxidised cellulose, but the collagen used here is a recombinant collagen produced in heterological expression systems. The term "recombinant" defines a protein, gelatin and/or collagen which were produced in the heterological expression system, inter alia, in the cells of bacteria, yeast, mammal or insect systems. Production and characteristics of recombinant gelatin and collagen were described in detail in the review by D. Olsen from 2003 *(*Olsen D., Yang C., Bodo M., Chang R., Leigh S., Baez J., Carmichael D., Perala M., Hamalainen E-J., Jarvinen M., Polarek J. Recombinant collagen and gelatin for drug delivery. Advanced Drug Delivery Reviews, 2003,55,1547-67*).*

Application documentation CN101695581 defines a method of producing hemostatic sponge from collagen close to human one. According to this method, dissolved collagen close to the human one and chitosan dissolved in dilluted acid are mixed with an addition of glycerine and/or sorbitol. The obtained solution is filtered, defrothed in the vacuum and then frozen and cross-linked. The cross-linked product is washed with distilled water, re-lyophilised and then sterilised.

The purpose of this invention is obtaining the aqueous solution of chitosan, chitosan composition and chitosan aerosol based on the aqueous solution of chitosan, and due to its properties, production of the chitosan hydrogel membrane and production of the chitosan-protein biopolymer material.

The method of obtaining the aqueous solution of chitosan which comprises a step of preparation of chitosan solution in aqueous solution of acid which is then neutralised and separated is characterised, according to the invention, in that the obtained solution of chemically non-modified microcrystalline chitosan is replenished with water in the quantity in which the concentration of chitosan in relation to its dry mass in the aqueous solution amounts to not less than 0.001% by weight, preferably from 0.5 to 2.0% by weight. Then the solution obtained in this way is mixed at a temperature not lower than 0°C, preferably 25°C, under the conditions of atmospheric pressure, while during the mixing process the solution is saturated with inorganic acidic oxides, preferably carbon dioxide, until obtaining clear chitozan solution and dissolving chitosan.

In a preferred variant of this method carbon dioxide is used in the gaseous phase and/or in the form of dry ice.

Another invention is a chitosan composition which according to the invention is characterised in that it contains aqueous solution of chitosan obtained according to the invention, in the quantity not lower than 80% by weight, and at least one biologically active compound and/or at least one cross-linking compound, and/or one plasticiser in the quantity not greater than 20% by weight.

In a preferred variant, the biologically active compound contained in the chitosan mixture is an anti-microbial compound and/or substance, preferably lysostaphin.

Another invention is chitosan aerosol which is characterised in that it contains a dispersion phase in the form of the aqueous solution of chitosan obtained according to the invention, in the quantity from 90 to 98% by weight, continuous phase in the form of propellant, preferably carbon dioxide, in the quantity from 2 to 10% by weight, and at least one biologically active compound in the quantity not greater than 5% by weight.

In a preferred variant, the biologically active compound contained in the aerosol is an anti-microbial compound and/or substance, preferably lysostaphin.

Another invention consists in application of the aqueous solution of chitosan obtained according to the invention in the method of producing chitosan hydrogel membrane which is specific because the aqueous solution of chitosan in which the concentration of chitosan in relation to its dry mass in aqueous solution amounts to not less than 1.0% by weight, preferably from 1.0 to 2.0% by weight, is poured to the mould and then conditioned at a temperature not lower than 1°C, preferably at a room temperature, under atmospheric pressure conditions, in the time not shorter than 12 hours, preferably 24 hours, but before pouring to the mould and conditioning it shall be preferred to add to the aqueous solution of chitosan at least one biologically active compound and/or at least one cross-linking compound, and/or at least one plasticiser, in the quantity not greater than 20% by weight and mix until the solution is homogeneous.

In a preferred variant of the method according to the invention, the biologically active compound contained in the hydrogel membrane is an anti-microbial compound and/or substance, preferably lysostaphin.

Another invention is a method of producing chitosan-protein biopolymer material which is characterised in that the obtained aqueous solution of chitosan, according to the invention, is mixed with modification additives such as cross-linking compounds, plasticisers, biologically active compounds, preserving agents. Then it is mixed with a dispersion of collagen and/or gelatin , formed, incubated and conditioned in a known manner.

In the variant of implementing the method according to the invention, fish and/or mammalian and/or recombinant gelatin, and/or fish and/or mammalian and/or recombinant collagen are used. In a preferred variant of the method according to the invention, the biologically active compound contained in the chitosan-protein biopolymer material is an anti-microbial compound and/or substance, preferably lysostaphin.

Another invention is a method of producing chitosan-protein biopolymer material which is characterised in that the obtained aqueous solution of chitosan, according to the invention, is mixed with modification additives such as cross-linking compounds, plasticisers, biologically active compounds, preserving agents. Then it is mixed with a dispersion of collagen and/or gelatin proteins, frothed, and then formed, incubated and conditioned in a known manner. Afterwards the obtained hydrogel is dried under atmospheric pressure conditions or by lyophilisation, and conditioned according to a known method.

In the variant of implementing the method according to the invention, fish and/or mammalian and/or recombinant gelatin, and/or fish and/or mammalian and/or recombinant collagen are used. In a preferred variant of the method according to the invention, the biologically active compound contained in the chitosan-protein biopolymer material is an anti-microbial compound and/or substance, preferably lysostaphin.

The method of obtaining the aqueous solution of chitosan according to the invention enables to obtain a transparent solution of chitosan in water. The method is not expensive and does not require specialist equipment and qualified personnel. The solution obtained according to the invention may be applied directly on the skin or plant tissue. Another merit of the chitosan solution obtained in this manner is its capability of autonomous gelling. The solution allows to apply chitosan in a thin layer which quickly changes into gel. Gelling is an effect of gradual increase of pH of the solution resulting from releasing carbon dioxide.

The chitosan aerosol, according to the invention, constitutes aqueous solution containing CO2 which after being released from the container forms a mist with a large inter-phase surface, which allows faster release of CO2 from the solution particles and at the same time faster formation of a thin hydrogel layer of chitosan.

Usage of the aqueous solution of chitosan to obtain the hydrogel membrane and chitosan-protein biopolymer material reduces time of the reactions. The method of producing chitosan-protein biopolymer material enables to produce the material with much better properties, including: biocompatibility, solubility, mechanical properties, elasticity, structure stability, in comparison to chitosan collagen materials obtained according to other known methods.

The object of the invention is presented in detail with the use of examples illustrating methods of its obtaining.

### Example 1

Method of obtaining an aqueous solution of chitosan in water.

2.7 g of chitosan with an average molecular weight in the range of 190-300 kDa and deacetylation degree of 85% was dissolved in 180 cm³ of 0.1 M solution of acetic acid. The process was conducted in a glass beaker with a volume of 400 cm³. Then 0.5 M of sodium hydroxide solution was gradually added to the prepared solution, with a frequency of 2 cm³/minute. The mixture was continually mixed with a mechanical mixer and rotational speed of 150 revolutions per minute until it reached pH value of 7.5. The deposit was separated by centrifuging for 30 minutes and rotational speed of 5,000 revolutions per minute.

The obtained deposit of microcrystalline chitosan was suspended in distilled water in the quantity necessary to obtain the total mass of 270 g. It was then homogenised for 3 minutes with 12,000 rotations/minute in order to obtain a homogeneous colloidal solution of microcrystalline chitosan. Then the solution obtained in this manner was saturated with gaseous carbon dioxide for 60 minutes, at a room temperature and under atmospheric pressure, with a mechanical mixer equipped with a proper self-bonded carbide ending through which the carbon dioxide was applied.

The method of selecting time for saturating the microcrystalline chitosan is described in Example 2.

The product of the process was a clear aqueous solution of chitosan with a concentration of 1.0% by weight. The solution was stored in an air-tightly closed polypropylene vessel until it was used again.

### Example 2

Viscosity measurement of the microcrystalline chitosan suspension in water during the process of saturating with carbon dioxide.

The example presents a method of experimental selection of time for saturating the colloidal microcrystalline chitosan solution prepared according to Example I, with gaseous carbon dioxide. Viscosity of the solution was measured during saturation in 10-minute intervals. The viscosity was determined at the temperature of 25±0.5° with a Brookfield viscometer - model DV-III+ with an attachment for small volumes, at the shear rate of 50 s⁻¹ (spindle SR-27), which is computer controlled with the use of the "Rheocalo" software. The results are presented in Table 1, including the value of standard deviation for the measurements performed during the three experiments. The minimum time of saturating colloidal solution of microcrystalline chitosan with carbon dioxide is time after which no significant change in viscosity of the obtained solution (± 5%) is observed. In the case of the presented example the state was reached after 60 minutes from the moment of beginning saturation with carbon dioxide. The solution became clear after 15 minutes from the beginning of the process of saturating with carbon dioxide.

**Table 1 Results of the viscosity measurement of the microcrystalline chitosan suspension in water during the process of saturating with carbon dioxide**

| Time [min.] | Spindle deformation [%] | Standard deviation |
|---|---|---|
| 0 | 9.58 | 0.79 |
| 10 | 19.50 | 1.41 |
| 20 | 28.00 | 1.47 |
| 30 | 34.50 | 1.12 |
| 40 | 35.65 | 1.52 |
| 50 | 35.80 | 0.82 |
| 60 | 35.60 | 0.79 |
| 70 | 35.70 | 0.45 |
| 80 | 35.80 | 0.47 |

### Example 3

Method of obtaining an aqueous solution of chitosan in water.

2.25 g of chitosan with an average molecular weight in the range of 50-190 kDa and deacetylation degree of 70% was dissolved in 150 cm³ of 1.0 M aqueous solution of acetic acid. The process was conducted in a glass beaker with a volume of 400 cm³. Then 0.5 M of sodium hydroxide solution was gradually added to the prepared solution, with a frequency of 2cm³/minute. The mixture was continually mixed with a mechanical mixer and rotational speed of 200 revolutions per minute until it reached pH value of 7.5. The deposit was separated by centrifuging for 30 minutes and rotational speed of 5,000 rotations/minute.

The obtained deposit of microcrystalline chitosan was suspended in distilled water in the quantity necessary to obtain the total mass of 180 g. It was then homogenised for 3 minutes with 12,000 revolutions per minute in order to obtain a homogeneous colloidal solution of microcrystalline chitosan. Then the solution obtained in this manner was saturated with gaseous carbon dioxide for 60 minutes, at a room temperature and under atmospheric pressure, likewise in Example I. Additionally while the solution was saturated with gaseous carbon dioxide, granules of crushed dry ice were added in order to intensify the saturation. A product obtained in the reaction was an aqueous solution of chitosan with a concentration of 1.25% by weight.

### Example 4

Method of obtaining an aqueous solution of chitosan in water.

1.35 g of chitosan with an average molecular weight in the range of 190-300 kDa and deacetylation degree of 85% was dissolved in 90 cm³ of 0.1 M solution of acetic acid. The process was conducted in a glass beaker with a volume of 400 cm³. The next step was a process carried out as in Example I. Its product was an aqueous solution of chitosan with a concentration of 0.5% by weight.

### Example 5

Method of obtaining an aqueous solution of chitosan in water.

2.7 g of chitosan with an average molecular weight in the range of 190-300 kDa and deacetylation degree of 30% was dissolved in 180 cm³ of 0.1 M solution of acetic acid. The process was conducted in a glass beaker with a volume of 400 cm³. The next step was a process carried out as in Example I. Its product was an aqueous solution of chitosan with a concentration of 1.0% by weight.

### Example 6

Method of obtaining an aqueous solution of chitosan in water.

5 dm³ of the 1.5% chitosan solution in the aqueous solution of acetic acid with a concentration of 0.5 mole/dm³ was poured into a reactor with a working volume of 10 dm³. Chitosan used in the reaction was characterised by an average molecular weight of 310-375 kDa and deacetylation degree of 75%. A reactor used to produce the aqueous solution of chitosan is equipped with an exchangeable high-speed mixer and an attachment for homogenisation. In the upper part of the reactor there is a pipe for discharging water, a connector pipe for discharging chitosan in the solid phase and a pipe for discharging solutions of hydroxides. In the lower part of the reactor there is a connector pipe with exchangeable filter used to separate filtrate and a connector pipe to discharge the solution of chitosan dissolved in water. The connector pipes are connected with a pressure pump. In the lower part of the reactor there is also a diffuser connected with a high-pressure cylinder filled with CO₂ and equipped with a pressure regulator.

A suspension of microcrystalline chitosan was precipitated with the use of a mechanical mixed on and at the rotational speed of 800 revolutions per minute, by adding gradually the aqueous solution of potassium hydroxide with the concentration of 0.5 mole/dm³ at the speed of 25 cm³/minute until reaching pH = 7.5. The obtained suspension was filtered off with the use of a vacuum pump and washed with water until reaching conductivity of the filtrate equal to the conductivity of water prior to the process of purifying.

The obtained deposit of microcrystalline chitosan was suspended in distilled water in the quantity necessary to obtain the total mass of 5000 g. It was then homogenised for 30 minutes with 12,000 revolutions per minute in order to obtain a homogeneous colloidal solution of microcrystalline chitosan.

Then the solution obtained in this manner was saturated with gaseous carbon dioxide for 3 hours, at a room temperature and under atmospheric pressure. The product was a clear aqueous solution with a concentration of 1.5% by weight. The solution was air-tightly closed in polypropylene vessels until it was used.

### Example 7

Transparent, odourless, fat-free and silicon-free gel used for lubricating female and male intimate parts in order to protect them against rubs and irritations.

The gel based on water and chitosan obtained as a result of mixing 80% by weight of 1.5% aqueous solution of chitosan with an average molecular weight in the range of 310-375 kDa and deacetylation degree of 85%, prepared in the same manner as the solution obtained according to Example 1, 19.6% by weight of glycerine and 0.4% by weight of methyl 4-hydroxybenzoate. The obtained, ready-to-use gel was stored in closed sachets.

### Example 8

Chitosan composition in the form of aerosol.

The composition in the form of aerosol in which the dispersion phase constitutes the aqueous solution of chitosan prepared according to Example 1 in the quantity of 95% by weight, and the continuous phase is carbon dioxide in the quantity of 5% by weight. This composition is obtained by filling aerosol containers containing a dispersion phase with propellant through the attached valves.

The composition is applied as a matrix for medical and cosmetic products, as well as for encapsulating seeds, fruits and parts of plants, protecting them against drying and microbial infections.

### Example 9

Chitosan composition in the form of aerosol.

The composition in the form of aerosol in which the dispersion phase constitutes the aqueous solution of chitosan prepared according to Example 3, and the continuous phase, i.e. propellant is a mixture of carbon dioxide in the quantity of 3% by weight and dimethyl ether in the quantity of 2% by weight. This composition is obtained by filling aerosol containers containing a dispersion phase with propellant through the attached valves.

### Example 10

Chitosan composition in the form of aerosol.

The composition in the form of aerosol in which the dispersion phase constitutes the aqueous solution of chitosan prepared according to Example 4 in the quantity of 90% by weight, and the continuous phase is carbon dioxide in the quantity of 10% by weight. This composition is obtained by filling aerosol containers containing a dispersion phase with propellant through the attached valves.

### Example 11

Chitosan composition in the form of aerosol chilling and alleviating the effects of burning.

The composition in the form of aerosol in which the dispersion phase constitutes the aqueous solution of chitosan prepared according to Example 1 in the quantity of 90% by weight, 5% of D-panthenol (provitamin B, (R)-(+)-2.4-dihydroxy-N-(3-hydroxypropyl)-3,3-dimethyl butyramide), and the continuous phase (propellant) is carbon dioxide in the quantity of 5% by weight.

### Example 12

Chitosan composition in the form of aerosol with warming properties.

The composition in the form of aerosol in which the dispersion phase constitutes the aqueous solution of chitosan prepared according to Example 3 in the quantity of 90% by weight, 5% by weight of capsaicin, and the continuous phase, i.e. propellant, is carbon dioxide in the quantity of 5% by weight. The obtained composition is used, inter alia, to minimise rheumatic pains.

### Example 13

Hydrogel membrane based on the aqueous solution of chitosan.

100 cm³ of 1.5% aqueous solution of chitosan prepared according to Example 6 was centrifuged in a polypropylene vessel for 1 minute at the speed of 3,000 revolutions per minute in order to remove air bubbles, and then poured to non-stick 6x4 cm moulds in the form of thin layer with the thickness of 0.5 cm. The moulds were conditioned for 24 hours, at a room temperature and under atmospheric pressure.

Conditioning resulted in obtaining transparent hydrogel membranes which may be applied as a medical and veterinary product for dressing wounds, and/or, as a cosmetic product, as a matrix for producing hydrogel masks.

### Example 14

Hydrogel membrane based on the aqueous solution of chitosan with an activity against *Staphylococcus aureus* strains.

100 cm³ of 1.5% solution of chitosan in water obtained according to the method presented in Example 3 was added with polyethylene glycol with an average molecular weight of 8,000 in the quantity of 20% by weight in relation to the dry mass of chitosan, and 1,500 units of lysostaphin in the form of 2.5 cm³ of the solution with an activity of 600 U/ml, mixing constantly at the speed of 150 revolutions per minute. The solution was centrifuged for 1 minute at the speed of 3,000 revolutions per minute in order to remove air bubbles, and then poured to non-stick 6x4 cm moulds in the form of thin layer with the thickness of 0.5 cm. The moulds were conditioned for 24 hours, at a room temperature and under atmospheric pressure.

The product of the process constituted hydrogel membranes which displayed activity against infections with *Staphylococcus aureus* strains due to the content of lysostaphin, a protein with anti-microbial activity.

### Example 15

Anti-microbial hydrogel membrane containing silver ions.

The hydrogel membrane based on 2.0% aqueous solution of chitosan with an average molecular weight in the range of 50-190 kDa and deacetylation degree of 80%, prepared in the same manner as the chitosan solution obtained according to Example 6, was obtained by mixing 99,7% by weight of 2.0% aqueous solution of chitosan and 0,3% by weight of silver sulphate. Then the mixture was centrifuged in order to remove gas bubbles. The subsequent process was conditioning of the moulds with a height of 0.4 cm to which the solution obtained as a result of mixing the aforementioned constituents at a room temperature and under atmospheric pressure for 24 hours was poured.

The obtained hydrogel membrane may be applied as medical dressing containing silver ions in the form of silver sulphate in the amount of 1.2 mg/cm² of the membrane.

### Example 16

Hydrogel membrane based on the aqueous solution of chitosan with cooling properties.

The hydrogel membrane based on 1.75% aqueous solution of chitosan with an average molecular weight in the range of 190-300 kDa and deacetylation degree of 80%, prepared in the same manner as the chitosan solution obtained according to Example 1, was obtained by mixing 90% by weight of 1.75% aqueous solution of chitosan, 5% by weight of (-)-menthol, 4.5% by weight of aloe *(Aloe vera)* extract and 0.5% sodium benzoate. Then the mixture was centrifuged in order to remove gas bubbles. The subsequent process was conditioning of the moulds to which the solution obtained as a result of mixing the aforementioned constituents at a room temperature and under atmospheric pressure for 24 hours was poured.

The obtained membrane in the form of hydrogel is applied as cooling and soothing material, inter alia, for sun burns, in scrotum cooling plasters used to protect against warming and in effect to regenerate spermatogenesis, for insect bites, migraine pains, fever conditions and as hydrogel under-eye recovery patches.

### Example 17

Hydrogel membrane based on the aqueous solution of chitosan with retinol.

The hydrogel membrane based on 1.75% aqueous solution of chitosan with an average molecular weight in the range of 190-300 kDa and deacetylation degree of 80%, prepared in the same manner as the chitosan solution obtained according to Example 6, was obtained by mixing 95% by weight of 1.75% aqueous solution of chitosan, 5% by weight of retinol. Then the mixture was centrifuged in order to remove gas bubbles. The subsequent process was conditioning of the moulds to which the solution obtained as a result of mixing the aforementioned constituents at a room temperature and under atmospheric pressure for 24 hours was poured. The obtained membrane in the form of hydrogel may be applied as a cosmetic mask.

### Example 18

Hydrogel membrane based on the aqueous solution of chitosan with B-group vitamins.

The hydrogel membrane based on 1.5% aqueous solution of chitosan with an average molecular weight in the range of 190-300 kDa and deacetylation degree of 80%, prepared in the same manner as the chitosan solution obtained according to Example 6, was obtained by mixing 95% by weight of 1.5% aqueous solution of chitosan, 5% by weight of B-group vitamins (b-complex) (biotin, riboflavin, thiamine, floacin). Then the mixture was centrifuged in order to remove gas bubbles. The subsequent process was conditioning of the moulds to which the solution obtained as a result of mixing the aforementioned constituents at a room temperature and under atmospheric pressure for 24 hours was poured. The obtained membrane in the form of hydrogel may be applied as a cosmetic mask.

### Example 19

Method of obtaining a dietary supplement supporting slimming with the use of aqueous solution of chitosan.

A product constituting a dietary supplement obtained as a result of mixing 94.73% by weight of 1.5% aqueous solution of chitosan prepared in the same manner as chitosan solution prepared according to Example IV, and 0.93% by weight of vitamin C, 0.19% by weight of niacin, 0.14% by weight of vitamin E, 0.07% by weight of pantoten acid, 0.02% by weight of vitamin B6, 0.02% by weight of vitamin B2, 0.01% by weight of vitamin B1, 2.19% by weight of magnesium chloride, 1.63% by weight of L-carnitine. The mixture was centrifuged in order to remove gas bubbles. Then 2.0 g of the solution obtained in this manner was poured into cylindrical moulds with a radius of 1.0 cm and height of 0.4 cm and conditioned for 24 hours, at a room temperature and under atmospheric pressure.

The gel capsules are applied as an orally administered diet supplement supporting slimming with additional content of vitamins in the quantity of 25% of RDA (recommended daily allowance) and magnesium in the quantity of 12.5% of RDA per one gel capsule.

### Example 20

Comparison of hardness of chitosan hydrogel membranes obtained from 1.0% chitosan solution produced from the aqueous solution according to the invention, to 1.0% chitosan solution produced from the solution of 0.1 M acetic acid, as a result of cross-linking with genipin with the concentration of 0.002 M.

The hydrogel membrane obtained by means of the method according to the invention was produced by mixing 100 cm³ of chitosan solution obtained acc. to Example 1 with 1.13 cm³ of 4.0% ethanol solution of genipin. The mixture was then centrifuged in a polypropylene vessel for 1 minute, at the speed of 3,000 revolutions per minute in order to remove air bubbles. Then the solution was poured to glass beakers with a diameter of 40 mm, in the quantity corresponding to 10 g. The moulds were conditioned for 24 hours, at a room temperature and under atmospheric pressure.

The chitosan hydrogel membrane obtained from acetic acid solution was produced by dissolving 1.0 g of chitosan with a deacetylation degree and an average molecular weight as chitosan in Example 1 in the solution of acetic acid with the concentration of 0.1 M, and then adding 1.13 cm³ of 4.0% ethanol solution of genipin, centrifuging to remove bubbles, pouring to glass beakers and conditioning.

Harness of the gel was measured with the use of a universal testing machine Instron 5543 equipped with a mandrel in the shape of a cylinder with a diameter of 1.27 cm. The strength necessary to immerse the mandrel in the gel to the depth of 0.3 cm with a speed of 0.05 cm/s was measured.

The result of the experiment is presented in the form of a graph in Figure 1. The membrane obtained according to the invention is more than 20 times harder than the membrane obtained from the solution of acetic acid.

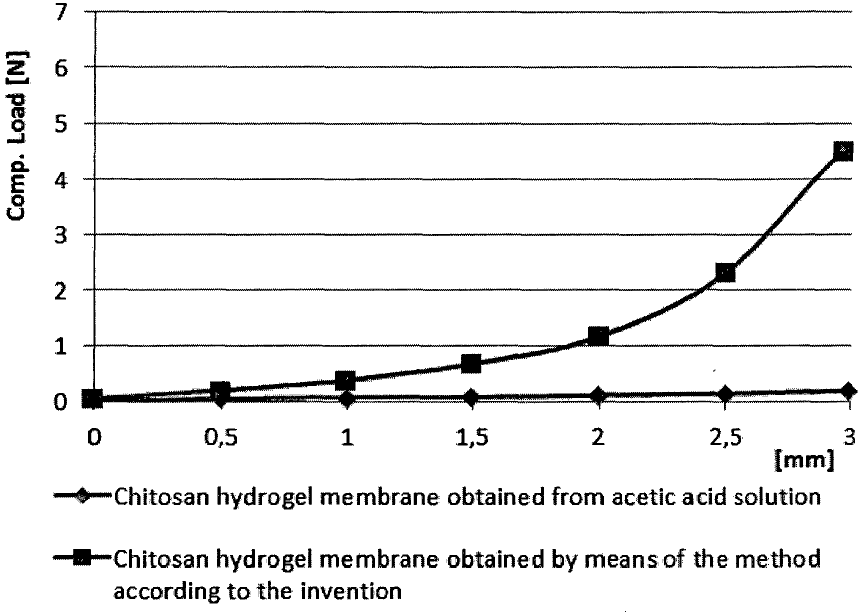

Fig. 1 Graph presenting the comparison of hardness of the chitosan hydrogel membranes.

### Example 21

Comparison of cross-linking kinetics of the aqueous solution of chitosan obtained by means of the method according to the invention to the cross-linking kinetics of the chitosan solution obtained from the solution of acetic acid with the use of genipin with the concentration of 0.005 M.

Cross-linking was conducted by adding 2.83 cm³ of 4.0% ethanol solution of genipin to 100 cm³ of 1.0% solutions of chitosan obtained according to the both methods. After adding genipin the solutions were mixed for 10 minutes, centrifuged to remove air bubbles. Then the sample with the weight of 9 g was placed in a measurement vessel.

The chitosan solution obtained according to the invention was produced according to Example I. The chitosan solution in the acetic acid was obtained by dissolving 1.0 g of chitosan with the properties as chitosan in Example 1 in 100 cm³of 0.1 M acetic acid.

Rheological properties of the prepared solutions were characterised by means of a Brookfield viscometer - model DV-III+ with an attachment for small volumes, at the coagulation speed of 30s⁻¹ (spindle SR-27). Change of measurement spindle deformation was measured in terms of time.

The result of the experiment is presented in the form of a graph in Figure 2. 100% of deformation for the solution obtained according to them invention was reached after 172 minutes. Whereas, this time for the solution obtained from the solution of acetic acid amounted to 446 minutes.

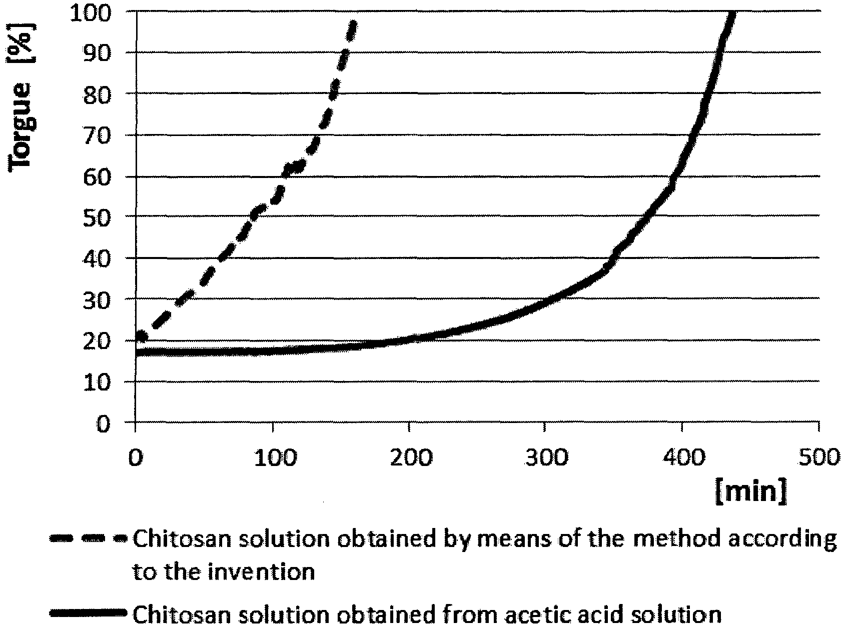

Fig. 2 Graph presenting the comparison of cross-linking kinetics of chitosan solutions.

### Example 22

Method of obtaining dispersion of collagen and gelatin used to obtain the chitosan-protein biopolymer material.

A protein dispersion of collagen and gelatin is prepared in the following manner:
1. 3 g of gelatin from African sharptooth catfish *(Clarias gariepinus)* is suspended in 50 cm³ of distilled water and left at a room temperature for 2 hours until it gets expanded, then heated to the temperature of ca. 50°C in order to dissolve it. The obtained solution of gelatin is cooled to the temperature of 20°C and added with 1.5 g of collagen from African sharptooth catfish (*Clarias gariepinus).* Then the whole mixture is homogenised until reaching a uniform solution of protein polymers.
2. 4.5 g of gelatin from Atlantic salmon (*Salmo salar*) is suspended in 50 cm³ of distilled water and left at a room temperature for 2 hours until it gets expanded, then heated to the temperature of ca. 50°C in order to dissolve it.
3. 6 g of collagen isolated from Atlantic salmon (*Salmo salar*) is suspended in 50 cm³ of distilled water cooled to the temperature of 12°C and homogenised until reaching a uniform solution.
4. 1.5 g of gelatin from Atlantic salmon (*Salmo salar*) and 1.5 g of gelatin from African sharptooth catfish (*Clarias gariepinus)* are suspended in 50 cm³ of distilled water and left at a room temperature for 2 hours until it gets expanded, then heated to the temperature of ca. 50°C in order to dissolve it. The obtained solution of gelatin is cooled to the temperature of 20°C and added with 1.0 g of collagen from African sharptooth catfish (*Clarias gariepinus)* and 0.5 g of recombinant human collagen. Then the whole mixture is homogenised until reaching a uniform solution of protein polymers.

### Example 23

Method of obtaining the chitosan-protein biopolymer material.

3.75 g of chitosan with an average molecular weight of 200 kDa and deacetylation degree of 80% was dissolved in 250 cm³ of 0.5 M solution of acetic acid. Then 0.5 M of sodium hydroxide solution was gradually added to the prepared solution. The mixture was continually mixed and controlled in terms of pH until it reached pH value of 7.5. The deposit was separated by centrifugation, and then washed three times with distilled water and recentrifuged. The obtained deposit was suspended in distilled water in the quantity necessary to obtain the total mass of 250 g. The mixture was then homogenised in order to obtain a homogeneous colloidal solution. Then the solution obtained in this manner was saturated with gaseous carbon dioxide for 3 hours, at a room temperature with a mechanical mixer equipped with a proper self-bonded carbide ending through which the carbon dioxide was applied. The clear chitosan solution obtained in the manner was added with 165 mg of genipin in the form of ethanol solution and mixed for 10 minutes, controlling the temperature not to exceed 20°C. Then 50 cm³ of collagen and gelatin dispersion prepared as in Example 22, section 1 was added and the whole mixture was mixed for another 10 minutes. The obtained solution was poured into 6x6 cm moulds with a thickness of 0.3 cm, and conditioned for 24 hours at a temperature of 20°C.

Chitosan-protein hydrogel in the form of a membrane was obtained.

### Example 24

Method of obtaining the chitosan-protein biopolymer material.

4,5 g of chitosan with an average molecular weight of 500 kDa and deacetylation degree of 60% was dissolved in 250 cm³ of 1.5% aqueous solution of hydrochloric acid. Then 0.5 M of sodium hydroxide solution was gradually added to the prepared solution. The mixture was continually mixed and controlled in terms of pH until it reached pH value of 7.5. The deposit was separated by centrifugation, and then washed three times with distilled water and recentrifuged.

The obtained deposit was suspended in distilled water in the quantity necessary to obtain the total mass of 250 g. The mixture was then homogenised in order to obtain a homogeneous colloidal solution. Then the solution obtained in this manner was saturated with gaseous carbon dioxide for 3 hours, at a room temperature, with a mechanical mixer equipped with a proper self-bonded carbide ending through which the carbon dioxide was applied. At the same time crushed dry ice was added. Then the obtained solution of chitosan was added with 0.75 g of polyethylene glycol, 180 mg of glutaraldehyde in the form of aqueous solution and 1,500 U of lysostaphin in the form of 2.5 cm³ of solution with the activity of 600 U/ cm³. Afterwards the mixture was mixed for 20 minutes. Then 50 ml of gelatin solution prepared as in Example 22, section 2 was added and the whole mixture was mixed for another 10 minutes. The obtained solution was poured into moulds with a diameter of 4 cm and thickness of 0.3 cm, at the bottom of which cotton fabric with a basis weight of 200 g/m2 was put. Then the solution was conditioned for 24 hours at a temperature of 10°C.

The product obtained constituted chitosan-protein hydrogel in the form of a membrane, combined with a cotton compress with an activity against *Staphylococcus aureus* strains.

### Example 25

Method of obtaining the chitosan-protein biopolymer material.

The solution of chitosan prepared and saturated with carbon dioxide, as in Example 24, was added with 0.66 g of glycerol, 99 mg of genipin in the form of aqueous solution and 2,250 U of lysostaphin in the form of 3.75 cm³ of solution with the activity of 600 U/ cm³. Afterwards the mixture was mixed for 20 minutes. Then the solution was added with 50 cm³ of collagen and gelatin dispersion prepared as in Example 22, section 1, and the whole mixture was mixed for another 10 minutes, controlling all the time the temperature not to exceed 20°C, and then frothed for another 10 minutes. The obtained solution was poured into 12x12 cm moulds with a thickness of 0.3 cm, and conditioned for 24 hours at a temperature of 20°C. The obtained chitosan-protein hydrogel in the form of a membrane was frozen at a temperature of -20°C for 24 hours, and then lyophilised. After the lyophilisation the obtained polymer material was conditioned at a room temperature and humidity of 90% for 3 hours.

The product obtained was chitosan-protein biomaterial in the form of sponge with an activity against *Staphylococcus aureus* strains.

### Example 26

Method of obtaining the chitosan-protein biopolymer material.

45 g of chitosan with an average molecular weight of 200 kDa and deacetylation degree of 80% was dissolved in 2500 cm³ of 1.5 M aqueous solution of hydrochloric acid. Then 0.5 M of sodium hydroxide solution was gradually added to the prepared solution. The mixture was continually mixed and controlled in terms of pH until it reached pH value of 7.5. The deposit was separated by centrifugation, and then washed three times with distilled water and recentrifuged. The obtained deposit was suspended in distilled water in the quantity necessary to obtain the total mass of 2500 g. The mixture was then homogenised in order to obtain a homogeneous colloidal solution. The obtained suspension was poured into a reactor with the volume of 4 dm3 and saturated with carbon dioxide introduced into the reactor. The mixture was mixed for 2 hours at a temperature of 10°C. Afterwards, successively 2.1 g of polyethylene glycol, 52.5 mg of genipin in the form of ethanol solution and 300 mg of ascorbyl glucoside in the form of aqueous solution were added to the previously prepared 250 g solution of chitosan. Mixing was continued for 20 minutes and then of 50 cm³ of collagen dispersion (x10) obtained as in Example 22, section 3 was added and mixed with the remaining constituents for another 10 minutes. The temperature was controlled all the time not to exceed 10°C. The obtained solution was poured into moulds with a diameter of 4 cm and thickness of 0.3 cm, and conditioned for 24 hours at a temperature of 10°C. The obtained chitosan-protein hydrogel in the form of a membrane was frozen at a temperature of -20°C for 24 hours, and then lyophilised. After the lyophilisation the moulds were conditioned at a room temperature and humidity of 90% for 3 hours. The materials were packaged in polyethylene bags. The product obtained in the above process was chitosan-protein biomaterial in the form of sponge with increased anti-oxidant properties achieved due to the content of ascorbyl glucoside - stable derivative of vitamin C.

### Example 27

Method of obtaining the chitosan-protein biopolymer material.

3.75 g of chitosan with an average molecular weight of 200 kDa and deacetylation degree of 80% was dissolved in 250 cm³ of 0.5 M solution of acetic acid. Then 0.5 M of sodium hydroxide solution was gradually added to the prepared solution. The mixture was continually mixed and controlled in terms of pH until it reached pH value of 7.5. The deposit was separated by centrifugation, and then washed three times with distilled water and recentrifuged. The obtained deposit was suspended in distilled water in the quantity necessary to obtain the total mass of 250 g. The mixture was then homogenised in order to obtain a homogeneous colloidal solution. Then the solution obtained in this manner was saturated with gaseous carbon dioxide for 3 hours, at a room temperature with a mechanical mixer equipped with a proper self-bonded carbide ending through which the carbon dioxide was applied. The clear chitosan solution obtained in the manner was added with 165 mg of genipin in the form of ethanol solution and mixed for 10 minutes, controlling the temperature not to exceed 20°C. Then 50 cm³ of collagen and gelatin dispersion prepared as in Example 22, section 4 was added and the whole mixture was mixed for another 10 minutes. The obtained solution was poured into 6x6 cm moulds with a thickness of 0.3 cm, and conditioned for 24 hours at a temperature of 10°C.

The obtained chitosan-protein hydrogel in the form of a membrane was frozen at a temperature of -20°C for 24 hours, and then lyophilised. After the lyophilisation the obtained polymer material was conditioned at a room temperature and humidity of 90% for 3 hours. The product obtained in the above process was chitosan-protein biomaterial in the form of sponge.

### Example 28

Method of obtaining the chitosan-protein biopolymer material in the form of sponge.

The chitosan-protein biomaterial in the form of sponge was obtained according to the method presented in Example 26, but the homogeneous aqueous colloidal solution of chitosan was saturated with gaseous sulphur dioxide.

## Claims

1. A method of obtaining the aqueous solution of chitosan with a molecular weight not lower than 10 kDa, preferably 50-400 kDa, and deacetylation degree not lower than 20%, preferably from 50 to 95%, which comprises a step of preparation of chitosan solution in a aqueous solution of acid which is then neutralised and separated, and then obtained thereof microcrystalline chitosan is preferably washed with water, **characterised in that** the obtained solution of chemically non-modified microcrystalline chitosan is replenished with water in the quantity in which the concentration of chitosan in relation to its dry mass in the aqueous solution amounts to not less than 0.001% by weight, preferably from 0.5 to 2.0% by weight, and then obtained thereof chitosan solution is mixed at a temperature not lower than 0°C, preferably 25°C, under the conditions of atmospheric pressure, while during the mixing process the solution is saturated with inorganic acidic oxides, preferably carbon dioxide, until obtaining clear chitosan solution and dissolving chitosan.

2. Method according to claim 1, **characterised in that** carbon dioxide is used in the gaseous phase and/or in the form of dry ice.

3. Achitosan composition **characterised in that** it contains aqueous solution of chitosan obtained according to one of claims 1-2, in the quantity not lower than 80% by weight, and at least one biologically active compound and/or at least one cross-linking compound, and/or one plasticiser in the quantity not greater than 20% by weight.

4. A mixture according to claim 3, **characterised in that** it contains an antimicrobial compound and/or substance, preferably lysostaphin, as a biologically active compound.

5. Chitosan aerosol **characterised in that** it contains a dispersion phase in the form of aqueous solution of chitosan obtained according to the method defined in one of claims 1-2, in the quantity from 90 to 98% by weight, continuous phase in the form of propellant, preferably carbon dioxide, in the quantity from 2 to 10% by weight, and at least one biologically active compound in the quantity not greater than 5% by weight.

6. Aerosol according to claim 5, **characterised in that** it contains an antimicrobial compound and/or substance, preferably lysostaphin, as a biologically active compound.

7. Method of producing chitosan hydrogel membrane **characterised in that** the aqueous solution of chitosan obtained according to the method defined in one of claims 1-2 in which the concentration of chitosan in relation to its dry mass in aqueous solution amounts to not less than 1.0% by weight, preferably from 1 to 2.0% by weight, is poured to the mould and then conditioned at a temperature not lower than 1°C, preferably at a room temperature, under atmospheric pressure conditions, in the time not shorter than 12 hours, preferably 24 hours, but before pouring to the mould and conditioning it shall be preferred to add to aqueous solution of chitosan at least one biologically active compound and/or at least one cross-linking compound, and/or at least one plasticiser, in the quantity not greater than 20% by weight and mix until the solution is homogeneous.

8. Method according to claim 7, **characterised in that** it contains an antimicrobial compound and/or substance, preferably lysostaphin, as a biologically active compound.

9. Method of producing chitosan-protein biopolymer material **characterised in that** the aqueous solution of chitosan obtained according to the method defined in one of claims 1-2, is mixed with modification additives such as cross- linking compounds, plasticisers, biologically active substances, preserving agents, and then mixed with a dispersion of collagen and/or gelatin, formed, incubated and conditioned according to a known method.

10. Method according to claim 9 **characterised in that** it uses fish and/or mammalian and/or recombinant gelatin, and/or fish and/or mammalian and/or recombinant collagen.

11. Method according to claim 9, **characterised in that** it contains an antimicrobial compound and/or substance, preferably lysostaphin, as a biologically active compound.

12. Method of producing chitosan-protein biopolymer material **characterised in that** the aqueous solution of chitosan obtained according to the method defined in one of claims 1-2, is mixed with modification additives such as cross- linking compounds, plasticisers, biologically active substances, preserving agents, and then mixed with a dispersion of collagen and/or gelatin proteins, frothed, formed, and incubated according to a known method, and furthermore after that the obtained hydrogel is dried under atmospheric pressure conditions or by lyophilisation, and conditioned according to a known method.

13. Method according to claim 12 **characterised in that** it uses fish and/or mammalian and/or recombinant gelatin, and/or fish and/or mammalian and/or recombinant collagen.

14. Method according to claim 12, **characterised in that** it contains an antimicrobial compound and/or substance, preferably lysostaphin, as a biologically active compound.

## Patentansprüche

1. Methode der Herstellung einer wässrigen Lösung von Chitosan mit einem Molekulargewicht von mindestens 10 kDa, vorzugsweise 50-400 kDa, und einem Deacetylierungsgrad von mindestens 20%, vorzugsweise von 50 bis 95%, die einen Schritt der Herstellung einer Chitosanlösung in einer wässrigen Säurelösung umfasst, die dann neutralisiert und abgetrennt wird dann wird daraus entstehendes mikrokristallines Chitosan vorzugsweise mit Wasser gewaschen, **dadurch gekennzeichnet**, wobei die erhaltene Lösung von chemisch nicht modifiziertem mikrokristallinem Chitosan mit Wasser in der Menge aufgefüllt wird, in der die Konzentration von Chitosan in Bezug auf seine Trockenmasse in der wässrigen Lösung nicht weniger als 0,001 Gew.-%, vorzugsweise von 0,5 bis 2,0 Gew.-%, beträgt. Danach wird die so erhaltene Chitosanlösung bei einer Temperatur von nicht weniger als 0°C, vorzugsweise 25°C, unter atmosphärischem Druck gemischt, wobei die Lösung während des Mischvorgangs mit anorganischen sauren Oxiden, vorzugsweise Kohlendioxid, gesättigt wird, bis eine klare Chitosanlösung entsteht und Chitosan sich auflöst.

2. Methode nach Anspruch 1, **gekennzeichnet dadurch, dass** Kohlendioxid im gasförmigen Zustand und/oder in Form von Trockeneis verwendet wird.

3. Chitosan-Zusammensetzung, **dadurch gekennzeichnet, dass** sie eine wässrige Lösung von Chitosan, die gemäß Anspruch 1 oder 2 erhalten wurde, in einer Menge von mindestens 80 Gew.-% und mindestens eine biologisch aktive Verbindung und/oder mindestens eine vernetzende Verbindung und/oder einen Weichmacher in einer Menge von mindestens 20 Gew.-% enthält.

4. Gemisch nach Anspruch 3, **dadurch gekennzeichnet, dass** sie eine antimikrobielle Verbindung und/oder Substanz, vorzugsweise Lysostaphin, als biologisch aktive Verbindung enthält.

5. Chitosan-Aerosol, **dadurch gekennzeichnet, dass** es eine Dispersionsphase in Form einer wässrigen Chitosanlösung, die mit einer Methode gemäß Anspruch 1 oder 2 erhalten wurde, in einer Menge von 90 bis 98 Gew.-%, eine kontinuierliche Phase in Form eines Treibmittels, vorzugsweise Kohlendioxid, in einer Menge von 2 bis 10 Gew.-% und mindestens eine biologisch aktive Verbindung in einer Menge von höchstens 5 Gew.-% enthält.

6. Aerosol nach Anspruch 5, **dadurch gekennzeichnet, dass** sie eine antimikrobielle Verbindung und/oder Substanz, vorzugsweise Lysostaphin, als biologisch aktive Verbindung enthält.

7. Methode der Herstellung einer Chitosan-Hydrogelmembran, **dadurch gekennzeichnet, dass** die wässrige Chitosanlösung, die nach dem Verfahren gemäß Anspruch 1 oder 2 erhalten wurde, wobei die Konzentration von Chitosan, bezogen auf seine Trockenmasse in wässriger Lösung, nicht weniger als 1,0 Gew.-%, vorzugsweise 1 bis 2,0 Gew.-% beträgt, in eine Form gegossen und dann bei einer Temperatur von nicht weniger als 1°C, vorzugsweise bei Raumtemperatur, unter atmosphärischem Druck in einer Zeit von nicht weniger als 12 Stunden, vorzugsweise 24 Stunden, konditioniert wird. Dabei wird es bevorzugt, vor dem Gießen in die Form und dem Konditionieren der wässrigen Lösung von Chitosan mindestens eine biologisch aktive Verbindung und/oder mindestens eine Vernetzungsverbindung und/oder mindestens einen Weichmacher in einer Menge von nicht mehr als 20 Gew.-% zuzusetzen und zu mischen, bis die Lösung homogen ist.

8. Methode nach Anspruch 7, **dadurch gekennzeichnet, dass** sie eine antimikrobielle Verbindung und/oder Substanz, vorzugsweise Lysostaphin, als biologisch aktive Verbindung enthält.

9. Methode der Herstellung von Chitosan-Protein-Biopolymer-Material, **dadurch gekennzeichnet, dass** die wässrige Chitosan-Lösung, die nach der Methode gemäß Anspruch 1 oder 2 erhalten wurde, mit Modifizierungszusätzen wie Vernetzungsverbindungen, Weichmachern, biologisch aktiven Substanzen, Konservierungsmitteln gemischt wird und dann mit einer Dispersion von Kollagen und/oder Gelatine gemischt, geformt, inkubiert und nach einer bekannten Methode konditioniert wird,

10. Methode nach Anspruch 9, **dadurch gekennzeichnet, dass** Fisch- und/oder Säugetier-und/oder rekombinante Gelatine und/oder Fisch- und/oder Säugetier- und/oder rekombinantes Kollagen verwendet wird.

11. Methode nach Anspruch 9, **dadurch gekennzeichnet, dass** sie eine antimikrobielle Verbindung und/oder Substanz, vorzugsweise Lysostaphin, als biologisch aktive Verbindung enthält.

12. Methode der Herstellung von Chitosan-Protein-Biopolymer-Material, **dadurch gekennzeichnet, dass** die wässrige Chitosan-Lösung, die nach der Methode gemäß Anspruch 1 oder 2 erhalten wurde, mit Modifizierungszusätzen wie Vernetzungsverbindungen, Weichmachern, biologisch aktiven Substanzen, Konservierungsmitteln gemischt wird und dann mit einer Dispersion von Kollagen- und/oder Gelatineproteinen gemischt, aufgeschäumt, geformt und nach einer bekannten Methode inkubiert wird, und dass danach das erhaltene Hydrogel unter atmosphärischem Druck oder gefriergetrocknet und nach einem bekannter Methode konditioniert wird.

13. Methode nach Anspruch 12, **dadurch gekennzeichnet, dass** Fisch- und/oder Säugetier-und/oder rekombinante Gelatine und/oder Fisch- und/oder Säugetier- und/oder rekombinantes Kollagen verwendet wird.

14. Methode nach Anspruch 12, **dadurch gekennzeichnet, dass** sie eine antimikrobielle Verbindung und/oder Substanz, vorzugsweise Lysostaphin, als biologisch aktive Verbindung enthält.

## Revendications

1. Méthode d'obtention de la solution aqueuse de chitosane avec un poids moléculaire non inférieur à 10 kDa, de préférence 50-400 kDa, et un degré de désacétylation non inférieur à 20 %, de préférence de 50 à 95 %, qui comprend une étape de préparation de la solution de chitosane dans une solution aqueuse d'acide qui est ensuite neutralisée et séparée, et ensuite, le chitosane microcristallin obtenu est de préférence lavé avec de l'eau, **caractérisé en ce que** la solution obtenue de chitosane microcristallin chimiquement non modifié est remplie d'eau dans la quantité dans laquelle la concentration de chitosane par rapport à sa masse sèche dans la solution aqueuse n'est pas inférieure à 0,001 % en poids, de préférence de 0,5 à 2,0 % en poids, puis la solution de chitosane ainsi obtenue est mélangée à une température non inférieure à 0°C, de préférence 25°C, dans des conditions de pression atmosphérique, tandis que pendant le processus de mélange, la solution est saturée d'oxydes acides inorganiques, de préférence de dioxyde de carbone, jusqu'à l'obtention d'une solution de chitosane claire et la dissolution du chitosane.

2. Méthode selon la revendication 1, **caractérisée en ce que** le dioxyde de carbone est utilisé en phase gazeuse et/ou sous forme de glace sèche.

3. Composition d'achitosane **caractérisée en ce qu'**elle contient une solution aqueuse de chitosane obtenue selon l'une des revendications 1-2, en quantité non inférieure à 80 % en poids, et au moins un composé biologiquement actif et/ou au moins un composé de réticulation, et/ou un plastifiant en quantité non supérieure à 20 % en poids.

4. Mélange selon la revendication 3, **caractérisé en ce qu'**il contient un composé antimicrobien et/ou une substance antimicrobienne, de préférence la lysostaphine, en tant que composé biologiquement actif.

5. Aérosol de chitosane **caractérisé en ce qu'**il contient une phase de dispersion sous forme de solution aqueuse de chitosane obtenue selon le procédé défini dans l'une des revendications 1-2, en quantité de 90 à 98 % en poids, une phase continue sous forme de propulseur, de préférence de dioxyde de carbone, en quantité de 2 à 10 % en poids, et au moins un composé biologiquement actif en quantité au plus égale à 5 % en poids.

6. Aérosol selon la revendication 5, **caractérisé en ce qu'**il contient un composé antimicrobien et/ou une substance antimicrobienne, de préférence la lysostaphine, en tant que composé biologiquement actif.

7. Méthode de production d'une membrane d'hydrogel de chitosane, **caractérisée en ce que** la solution aqueuse de chitosane obtenue selon le procédé défini dans l'une des revendications 1-2, dans laquelle la concentration de chitosane par rapport à sa masse sèche en solution aqueuse est égale ou supérieure à 1,0 % en poids, de préférence de 1 à 2,0 % en poids, est versée dans un moule et ensuite conditionnée à une température non inférieure à 1°C, de préférence à une température ambiante, dans des conditions de pression atmosphérique, pendant une durée non inférieure à 12 heures, de préférence 24 heures, mais avant de la verser dans le moule et de la conditionner, il est préférable d'ajouter à la solution aqueuse de chitosane au moins un composé biologiquement actif et/ou au moins un composé de réticulation, et/ou au moins un plastifiant, en une quantité non supérieure à 20 % en poids et de mélanger jusqu'à ce que la solution ne soit homogène.

8. Méthode selon la revendication 7, **caractérisée en ce qu'**elle contient un composé antimicrobien et/ou une substance antimicrobienne, de préférence la lysostaphine, en tant que composé biologiquement actif.

9. Méthode de production d'un matériau biopolymère chitosane-protéine **caractérisée en ce que** la solution aqueuse de chitosane obtenue selon la méthode définie dans l'une des revendications 1-2, est mélangée avec des additifs de modification tels que des composés de réticulation, des plastifiants, des substances biologiquement actives, des agents de conservation, et puis mélangée avec une dispersion de collagène et/ou de gélatine, formée, incubée et conditionnée selon un procédé connu.

10. Méthode selon la revendication 9, **caractérisée en ce qu'**elle utilise de la gélatine de poisson et/ou de mammifère et/ou recombinante, et/ou du collagène de poisson et/ou de mammifère et/ou recombinant.

11. Méthode selon la revendication 9, **caractérisée en ce qu'**elle contient un composé antimicrobien et/ou une substance antimicrobienne, de préférence la lysostaphine, en tant que composé biologiquement actif.

12. Méthode de production d'un matériau biopolymère chitosane-protéine **caractérisée en ce que** la solution aqueuse de chitosane obtenue selon la méthode définie dans l'une des revendications 1-2, est mélangée avec des additifs de modification tels que des composés de réticulation, des plastifiants, des substances biologiquement actives, des agents de conservation, et puis mélangée avec une dispersion de protéines de collagène et/ou de gélatine, moussée, formée et incubée selon un procédé connu. Après, l'hydrogel ainsi obtenu est séché dans des conditions de pression atmosphérique ou par lyophilisation, et conditionné selon une méthode connue.

13. Méthode selon la revendication 12, **caractérisée en ce qu'**elle utilise de la gélatine de poisson et/ou de mammifère et/ou recombinante, et/ou du collagène de poisson et/ou de mammifère et/ou recombinant.

14. Méthode selon la revendication 12, **caractérisée en ce qu'**elle contient un composé antimicrobien et/ou une substance antimicrobienne, de préférence la lysostaphine, en tant que composé biologiquement actif.
